Europäisches Patentamt

(19) European Patent Office

Office européen des brevets

(11) Publication number: **0 042 605**
**A1**

## (12) EUROPEAN PATENT APPLICATION

(21) Application number: **81104736.4**

(22) Date of filing: **19.06.81**

(51) Int. Cl.³: **B 01 D 1/26**
**A 23 C 1/12, F 26 B 25/00**

(30) Priority: **20.06.80 DK 2667/80**

(43) Date of publication of application:
**30.12.81 Bulletin 81/52**

(84) Designated Contracting States:
**DE FR GB NL SE**

(71) Applicant: **A/S NIRO ATOMIZER**
**No. 305 Gladsaxevej**
**DK-2860 Soeborg(DK)**

(72) Inventor: **Bjärekull, Bo**
**5416 Ellicot Road Apartment 6**
**Columbia Maryland 21045(US)**

(72) Inventor: **Jensen, Poul Kofoed**
**Lilla Vaerloesevej 72**
**DK-3500 Vaerloese(DK)**

(74) Representative: **Patentanwälte Grünecker,**
**Dr.Kinkeldey Dr.Stockmair, Dr.Schumann,Jakob,**
**Dr.Bezold Meister, Hilgers, Dr.Meyer-Plath**
**Maximilianstrasse 43**
**D-8000 München 22(DE)**

(54) **Method of operating a vapour-heated process system.**

(57) In a vapour-heated process system such as a falling film evaporation system (23), at least part of the vapour is generated by flashing of a hot liquid (20) which has been heated by heat exchange with exhaust gas (15) from an air heater (10) delivering air (14) for drying of a liquid product which is concentrated by evaporation in the process system. The liquid is typically water formed as a condensate from the heating vapour passed into the system and/or generated in the evaporation process. Exhaust gas is of a temperature of 100 – 400°C, in particular 200 – 300°C, and water subjected to the heat exchange has a temperature in the range of 40 - 80°C, typically leaves the heat exchanger at a temperature of about 100°C and is flashed into the system to a temperature of about 50 – 80°C. Exhaust gas may be exhaust gas from an indirect air heater delivering heated air for spray drying the product concentrated in the evaporation system. Heat exchanger (17) is a finned tube heat exchanger. Method utilizes heat transfer from the relatively low temperature exhaust gas to the low temperature water to obtain hot water useful for supplementing primary vapour supply to the process system.

Fig. 1.

## Method of Operating a Vapour-heated Process System.

The present invention relates to a method of operating a vapour-heated process system.

A wide variety of processes, typically evaporation or destillation processes, use vapour, in particular water vapour, as heating medium. Normally, at least part of the vapour is generated by flashing of a heated liquid, in particular heated water. Examples of such processes are falling film evaporation processes comprising one or several stages (also called effects), rising film evaporation processes, forced recirculation evaporation processes, and batch evaporation processes.

The present invention relates to a method of operating such a vapour-heated process system in a particularly economic manner to reduce the costs of fuel necessary for generating the vapour consumed in the process system. In the following description, the method of the invention will be described with particular reference to a falling film evaporation process system, but it will be understood that the principles of the invention are equally applicable to other vapour-heated process systems, for example systems used in the processes specifically mentioned above.

According to the invention, at least part of the heated liquid from which vapour for heating the process system is generated by flashing is heated by heat exchange with exhaust gas from an air heater delivering air for drying of a liquid product which is concentrated by evaporation in the process system.

In the present context, the term "vapour-heated process system" is intended to indicate a process system which utilizes the latent heat of the vapour and in which at least part of the vapour is, hence, condensed, and the term "flashing" designates vapourizing a volatile liquid by introducing the liquid into conditions where the pressure is lower than the vapour pressure of the liquid at the temperature prevailing.

Taking as an example a falling film evaporation system utilized for evaporation of milk which is to be spray dried, the known art evaporation process is typically performed through a series of stages or effects, each effect comprising a bundle of substantially vertically extending tubes in a housing, the milk flowing downwardly as a film along the inner walls of these tubes, while the water vapour or steam is admitted to the space defined in the housing between said tubes. Thus, the milk and the heating water vapour are brought into heat-transmitting contact so that the water vapour gives off heat to the process liquid whereby the water vapour is cooled and condensed while part of the water of the milk is evaporated. When the process is performed through several serially connected effects, the water evaporated from the milk in the first stage is suitably introduced into the next effect to establish at least part of the heating vapour for the next effect, and the condensed vapour from the first effect is also suitably flashed into the next effect. The vapour from the last effect is normally discharged to a condenser. The condensate is either discharged or used for cleaning or rinsing purposes, or it may be used for room heating, etc. The concentrated milk obtained in the evaporation process is spray dried in a spray tower using heated air produced in a heat exchanger (air heater) where the air is heat exchanged with flue gas from a combustion chamber.

According to the present invention, the heat economy of such a system is improved in an extremely desirable way in that at least part of the water vapour used for heating the process system is generated by flashing of heated water, the heating of at least part of said water being performed by heat exchange with exhaust gas from the heat exchanger which heats the air used in the spray drying process. The method of the invention can typically utilize exhaust gas having a temperature in the range of 100 - 400°C; the exhaust gas from the said heat exchanger will usually have a temperature which is in the range of 200 - 300°C.

According to the invention, the heat exchange with the exhaust gas is suitably performed in a finned tube heat exchanger. While exhaust gases from indirect air heaters are often directly dissipated into the atmosphere due to the fact that their relatively low temperature does not warrant any suitable utilization thereof, heat exchange with water in a finned tube heat exchanger will be favourable and can increase the water temperature to a level at which the water can be flashed into the process system and hence becomes a valuable contribution to the water vapour or steam introduced as heating medium into the system.

The water which is subjected to the heat exchange to obtain heated water for flashing into the process system may suitably be condensate from the vapour-heated process system. In this manner, such condensate is being raised from a temperature which is mostly too low for any primary use in the process system, to a temperature where the water is suitable for being flashed into the process system to contribute a valuable amount of the heat consumed in the process system.

In other words, the principle of the invention raises water, which would normally be considered as having a too low temperature to be interesting as major primary heat contributor to the process system, to a useful temperature for flashing into the process system as at least part of the vapour heating the process system, by heat exchange with exhaust gas which has a temperature at which it is normally considered uninteresting as any major heat supplier. This optimal and economic utilization of the two media is performed in an economic way by means of heat exchange equipment which may be of a simple and cheap construction and with obtainment of liquid, typically water, heated to a temperature where it is easily flashed into the process system without incurring any additional major requirements with respect to installations or process control.

In a multiple-effect evaporation process system operated in accordance with the method of the invention, the hot water leaving the finned tube heat exchanger is usually flashed down to the temperature and pressure prevailing in the steam chest of the first effect, the released flash vapours then being used as part of the heating vapour. However, it is also within the scope of the invention to flash the hot water from the heat exchanger into the steam chest of the second or a later effect in the system, and it may also be desirable that the flashing of the heated water is performed into a flash vessel arranged prior to the first effect. These possibilities are discussed in greater detail below. It will be understood that the maximum heat recovery will be obtained when condensate is taken from the last effect, subjected to the heat exchange and reinjected, after the heating, into the first effect. However, sometimes other factors such as the requirement for condensate as pure boiler feed water, may make it preferable that the condensate taken from the last effect is reinjected, after the heat exchange, into the second or a later effect.

The exhaust gas with which the heat exchange is performed should be of a character which is non-corrosive to the heat exchanger under the conditions prevailing. Thus, for example, flue gas from oil burners will not be preferred for use with heat exchangers made of steel, not even stainless steel, due to the corrosive character of such flue gas at surface temperatures below 150°C. On the other hand, flue gases from gas fired burners will not be of such corrosive character and are well suited for use with heat exchangers of steel.

It will be understood that the principle of the invention can be utilized both in connection with processes where the liquid heated in the heat exchanger and flashed into the process system is derived from the system itself such as in the example discussed above, and for systems where the liquid is not derived from the system itself but is derived from another source, such as waste liquid from another process. On the other hand, the co-operation which is illustrated in the above-mentioned case where condensate from the process system is heated by the heat exchange with exhaust gas from the connected air heater and is reinjected into the system will often be aimed at as a preferred embodiment of the invention where the complete process system and the air heater can be adapted to each other for optimal utilization of the exchange to generate hot liquid for flashing into the system.

German Offenlegungsschrift No. 28 04 108 discloses an evaporating system in which a thermal power engine is used for condensing the vapour evaporated from the concentrated product and at least part of the waste heat from the thermal power engine is utilized in a heat exchanger for heating a medium which may be the product to be evaporated or a different product. Such principle is basically different from the method of the present invention where the energy of a low temperature exhaust gas is utilized for heat exchange with a low temperature liquid to raise the liquid to a temperature where it can be flashed into the process system. In Verfahrenstechnik, Vol. 10 (1976), pages 578 - 579, a process system is illustrated in which waste water at a temperature of 80°C is flashed into a vacuum cooling tower and is cooled in the tower, the vapour generated in the flashing being utilized as heating source in a falling film evaporator. While the article does not mention anything about the origin of the waste water in question, it certainly does not suggest the obtainment of the hot water in a heat exchange with an exhaust gas, in particular a low temperature exhaust gas such as is the gist of the method of the present invention. It has also been suggested to utilize hot exhaust air from a dryer for heating an evaporator. However, the use of hot exhaust air for heating an evaporator would present a number of serious controlling problems and cannot be compared with the method of the invention where the energy of the exhaust gas is utilized for heating a liquid which is then flashed into the vapour-heated process system and contributes to establish part of the heating vapour heating the system, thus permitting utilization of the normal installations and control means in such a system.

An article in Dairy Industries International, January 1979, pages 18-20, entitled "Low energy milk drying plants", states, in connection with the problem of heat recovery, that "The specific heat consumption of a spray dryer is 14 - 15 times that of a multi-effect evaporator. Therefore, it is of little interest to reduce the heat required for concentration by means of the heat contained in the discharged air from the dryer. However, it is of great interest to utilize this heat to reduce the heat consumption of the dryer". This statement emphasizes the inventive quality of the present method where heat exchange between a liquid and the exhaust gas from, for instance, the air heater in a spray dryer and flashing of the hot liquid into the evaporation system ensures an optimal heat utilization with retainment of all the advantages of an easily controlled vapour-heated evaporation process.

The invention will now be further described with reference to the drawings, wherein

Fig. 1 is a flow chart of an evaporation system for evaporating, e.g., milk, communicating with a heat exhanger which is in contact with exhaust flue gas from an indirect air heater generating heated air for spray drying the concentrated milk,

Fig. 1a is a detail of an alternative embodiment of the system of Fig. 1, and

Figs. 2 and 3 are flow charts of alternative embodiments of the system illustrated in Fig. 1.

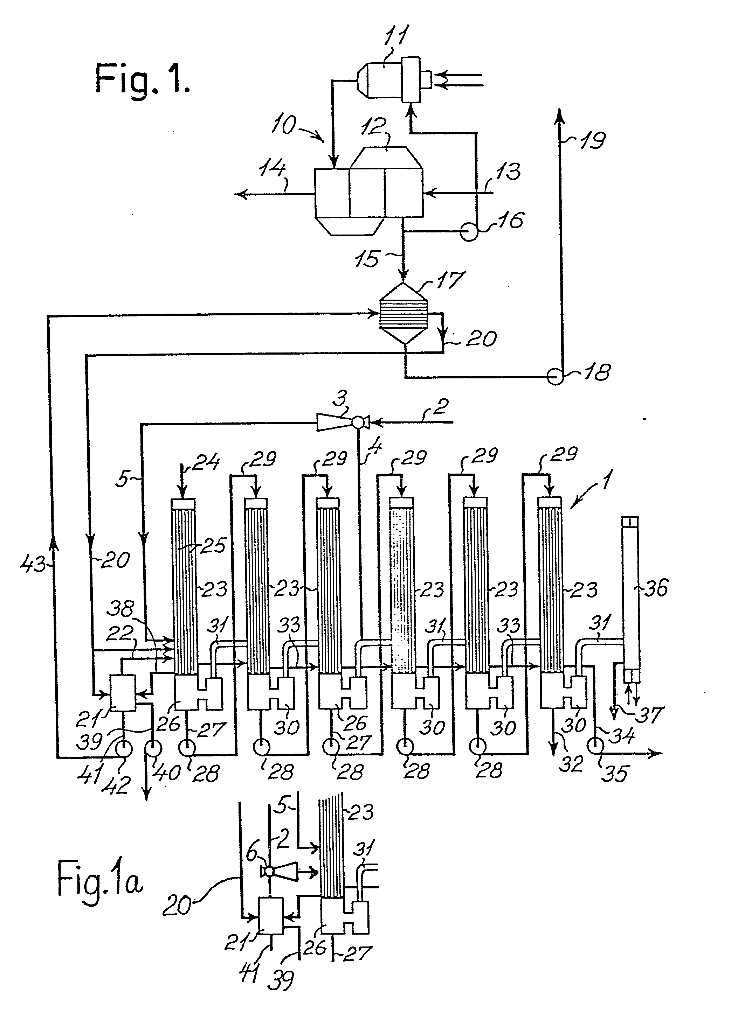

In Fig. 1, 1 is a multiple-effect falling film evaporation system. From a direct steam source, steam is passed through a line 2, via a thermocompressor 3, connected to a vapour suctioning line 4, and the mixture of high pressure steam and sucked-out vapour is passed through a line 5 into the steam chest of a first effect 23 of the evaporating system where the product to be evaporated passes through a bundle of parallel tubes 25 arranged substantially vertically. A product, such as milk, is introduced at the top of the first effect 23 through a line 24, and water is evaporated from the milk during the passage of the milk through the tubes 25. From a collecting chamber 26 at the bottom of the first effect, the concentrated milk is passed through a line 27 by means of a pump 28 and via a line 29 to the top of the second effect 23 where further evaporation of water from the milk takes place. In this manner, the milk passes serially through the remaining effects of the multiple-effect evaporation system. The final concentrated milk is withdrawn through a line 32 for passage into a spray dryer (not shown).

From a separator 30, connected to the bottom chamber 26 of each effect, the water vapour generated by the evaporation of the milk is separated from liquid droplets and is passed through a line 31 for use as heating medium in the following effect. From the last effect, the water condensed at the outside of the tubes 25 is withdrawn through a line 34 by means of a pump 35. The water vapour from the last effect 23 is condensed in a water-cooled condenser 36 and is discharged through a line 37.

From the first effect 23, condensate generated by condensation of the water vapour at the outside of the tubes 25 is withdrawn via a line 38 and is passed into a flash vessel 21. Optionally, part of the condensate from the outside of the tubes of the first effect 23 is flashed into the next effect 23, and the same is performed with the condensate from the second effect which is flashed into the third effect, etc, through lines 33. The condensate from the first effect is substantially free from constituents derived from the milk evaporated, and is suited as boiler feed water, in a manner known per se. Any part of the condensate from the first effect to be used as boiler feed water is withdrawn from the flash vessel 21 through a line 39 by means of a pump 40. From the flash vessel 21, the remaining water is withdrawn through a line 41 by means of a pump 42 and is passed through a line 43 into a finned tube heat exchanger 17 from which the heated water is passed through a line 20 and is either flashed directly into the first effect 23, such as indicated by the branching of line 20, or is flashed into the flash vessel 21 from where the water vapour is passed into the first effect through a line 22. Thus, the water vapour formed when the water heated by heat exchange in the finned tube heat exchanger 17 is flashed into the first effect, either directly or via the flash vessel, is combined with the water vapour from the thermocompressor 3 to achieve the required total evaporation through the stages. The live steam supply to the thermocompressor 3 is controlled to achieve, in combination with the reheated condensate from the heat exchanger, the required temperature and pressure conditions through the effects.

The heat exchanger 17 is heated by exhaust flue gas from an air heating system 10 adapted to deliver heated air to a spray dryer (not shown) in which the concentrated milk is dried. Alternatively, the heat exchanger 17 is heated by exhaust drying gas from a spray dryer. From a gas fired combustion chamber 11, hot flue gases at a temperature of about 900°C are passed into a tubular heat exhanger 12 in which air at ambient temperature, e.g. about 10°C, introduced through a line 13, is heated to about 220°C, and the flue gas is cooled to about 215°C. Optionally, part of the flue gases is recycled to the combustion chamber 11 by means of a fan 16 to control the temperature of the hot flue gases. In the heat exchanger 17, the condensate from line 43 is typically heated from a temperature of about 70°C to 100°C, and the flue gas temperature is lowered to about 90°C. The exhaust gases from the finned tube heat exchanger are discharged to the atmosphere by a fan 18 through a line 19.

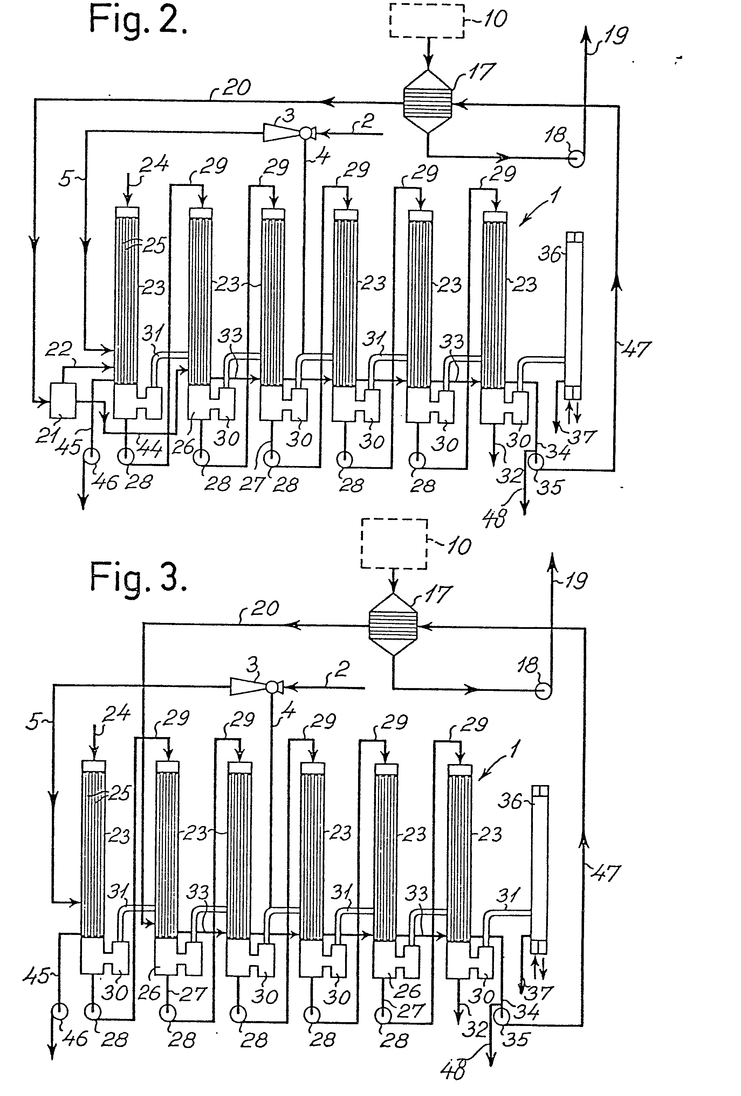

In Figs. 2 and 3, the numerals have the same meanings as in Fig. 1.

In the embodiment shown in Fig. 2, the finned tube heat exchanger 17 is fed with condensate taken from the last effect and passed through a line 47 from the pump 35. In this manner, a maximum heat recovery is obtained in the heat exchange with the exhaust gas. Part of the condensate may be discharged through a line 48. From the finned tube heat exchanger 17, the heated condensate is passed to the flash vessel 21 connected to the outside of the first effect 23. The vapour formed by the flashing of the heated condensate into the flash vessel is used as heating medium in the first effect 23. The liquid phase from the flash vessel 21 is passed through a line 44 and is flashed into the second effect (or a later effect), and its latent heat is utilized for the evaporation. All condensate from the heating side of the first effect is used as boiler feed water and is withdrawn by means of a pump 46.

In the embodiment shown in Fig. 3, the condensate passed to the finned tube heat exchanger is taken from the last effect like in Fig. 2, but from the finned tube heat exchanger 17, the heated condensate is passed into the second effect 23 where it is flashed down and its latent heat utilized for the evaporation process. All condensate formed on the heating side of the first effect originates from the thermocompressor and can be taken out as boiler feed water. This embodiment gives a slightly lower efficiency than the system illustrated in Fig. 2, but a cleaner boiler feed water is achieved.

Fig. 1a shows a detail of an alternative embodiment of the evaporation plant shown in Fig. 1. In the embodiment shown in Fig. 1a, the vapour generated by flashing the hot water in line 20 into the flash vessel 21 is sucked from the flash vessel 21 by means of a thermocompressor 3 connected to a direct steam source through line 2. In this manner, the saturation temperature of the vapour introduced into the effect 23 may be increased by up to about 20°C. The measure of increasing the saturation temperature of the vapour generated by flashing of the liquid heated by the heat exchange is a feature which may be generally applied as an embodiment of the method of the present invention.

Example.

In the 6-effect evaporation plant illustrated in Fig. 1, 47,540 kg/h wholemilk are concentrated from a total solid content of 13% to a total solid content of 50%.

The evaporation plant co-operates with a spray dryer which uses 125,000 kg of air/h. The air is heated by an indirect gas heater 12 which generates 11,000 kg/h of exhaust gas at 215°C. The exhaust gas is passed into the finned tube heat exchanger 17 where it is cooled to 90°C by 10,800 kg/h of water which is thereby heated from 68°C to 100°C. The water is taken as condensate from the outside of the first effect such as shown in Fig. 1 and is flashed into the same effect at 100°C, thereby releasing about 345,000 Kcal/h.

By this extra energy addition, the amount of steam supplied over the thermocompressor can be reduced from 3990 til 3665, corresponding to a saving of 325 kg/h of steam (8%).

Claims.

1. A method of operating a vapour-heated process system in which at least part of the vapour is generated by flashing of a heated liquid, comprising heating at least part of said liquid by heat exchange with exhaust gas from an air heater delivering air for drying of a liquid product which is concentrated by evaporation in the process system.

2. A method as claimed in claim 1 in which the vapour-heated process system is a falling film evaporation process comprising at least one effect.

3. A method as claimed in claim 1 or 2 in which the liquid is water.

4. A method as claimed in claim 1, 2, or 3 in which the liquid is condensate formed by condensation in the vapour-heated process system.

5. A method as claimed in any of the preceding claims, in which the temperature of the exhaust gas is in the range of 100 - 400°C.

6. A method as claimed in claim 1 in which the process system is a multiple-effect falling film evaporation system, the exhaust gas is exhaust gas from an air heater delivering air for spray drying of a liquid product which is concentrated by evaporation in the falling film evaporation system, the liquid is condensate formed by condensation in the multiple-effect falling film evaporation system, and the heat exchange between the liquid and the exhaust gas is performed in a finned tube heat exchanger.

7. A method as claimed in any of the preceding claims, in which the temperature of the exhaust gas is in the range of 200 - 300°C.

8. A method as claimed in any of the preceding claims, in which the process system is an evaporation system for concentrating milk, and the liquid subjected to the heat exchange is water at a temperature in the range from ambient temperature to 80°C.

9. A method as claimed in claim 8, in which the temperature of the water subjected to the heat exchange is in the range of 40 - 80°C.

10. A method as claimed in claim 8 or 9, in which the water is heated, in the heat exchange, to a temperature of about 100°C and is flashed down to a temperature of about 50 - 80°C.

Fig. 1.

Fig.1a

0042605

Fig. 2.

Fig. 3.

0042605

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | GB - A - 1 163 577 (FOSTER WHEELER LTD.) <br><br> * Page 1, lines 14-29; figure * <br><br> -- | 1 | B 01 D 1/26 <br> A 23 C 1/12 <br> F 26 B 25/00 |
| A | DE - B - 1 092 442 (METALLGESELL-SCHAFT) | 1,3,4 | |
| A | DE - B - 1 092 443 (METALLGESELL-SCHAFT) | | |
| A | GB - A - 2 012 927 (HITACHI LTD.) | | |
| A | GB - A - 1 448 652 (SULZER BROTHERS LTD.) <br><br> ---- | | **TECHNICAL FIELDS SEARCHED (Int. Cl.³)** <br><br> B 01 D 1/26 <br> 1/28 <br> A 23 C 1/12 <br> 1/04 <br> F 22 B 7/00 <br> 3/12 <br> 17/10 <br> 17/24 <br> 20/00 <br> 21/00 <br> 23/00- <br> 25/00 |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 29-09-1981 | VAN BELLEGHEM |

EPO Form 1503.1  06.78